# EUROPEAN PATENT SPECIFICATION

(11) **EP 2 623 288 B1**
(45) Date of publication and mention of the grant of the patent: **17.07.2019**
(21) Application number: 13154065.0
(22) Date of filing: 05.02.2013
(51) Int. Cl.: B29C 44/34, B29C 44/54, A01G 31/00, C08J 9/236, B29K 67/00, B29K 23/00, B29K 25/00, C08L 29/04, B29K 105/04, C08L 25/06

(54) **Method for the production of foam moulded parts.**
Verfahren zur Herstellung geschäumter Formteile
Procédé pour la production de pièces moulées en mousse

(30) Priority: 06.02.2012 NL 2008240
(43) Date of publication of application: 07.08.2013
(73) Proprietor: BEWiSynbra RAW B.V., 4871 NM Etten-Leur (NL)
(72) Inventor: Van Der Burgt, Petrus Henricus Johannes, 6631 KW HORSSEN (NL); Van Den Hoonaard, Kenneth, 6601 JH WIJCHEN (NL); Noordegraaf, Jan, 6602 ZX WIJCHEN (NL); Rensen, Petrus Frederikus Maria, 6686 MH DOORNENBURG (NL)
(74) Representative: Algemeen Octrooi- en Merkenbureau B.V.

(56) References cited:
- EP-A1- 1 870 431
- WO-A1-2011/062224
- WO-A2-2008/130225
- US-A- 5 049 328
- US-A1- 2006 167 122
- US-A1- 2008 234 400
- US-A1- 2010 301 509

## Description

The present invention relates to a method for the production of foam moulded parts. The invention also relates to foam moulded parts.

A similar material is known from the European patent EP 1 486 530 in the name of the present inventor. The aforementioned European patent discloses a foam with a fine cell structure and a low density whereby an improvement in the heat insulation value thereof due to the presence of active carbon as a heat insulating material in the polystyrene particles.

According to US 2005/0266244 an expanded polystyrene granule with a functional layer is known. Accordingly a solution of polyvinyl acetate containing a functional additive, is applied as a coating. The method includes firstly expanding the expandable polystyrene granules and thereafter the thus expanded polystyrene granules are mixed by stirring with the said polyvinyl acetate solution, and wherein during the mixing hot air is added, followed by the addition of the so called release agent in order to obtain an amount of separate particles. The thus obtained amount of separate particles is dried and transported over a steam mould through which steam is dosed in order to fuse the separate particles together to obtain a foamed moulded part that exhibits a compact structure. As a result of the said expansion step it can be said that there is a functionalized coating within an expanded structure.

According to the Dutch patent NL 1033719 in the name of the present applicant a method for the production of foamed moulded parts is disclosed wherein particles of polylactic acid are impregnated in a pressure vessel with a blowing agent, namely CO₂ at a pressure of 20 bar for 5 hours. The accordingly obtained particles of polylactic acid are subsequently pre-foamed or pre-expanded by application of warm air (with a temperature of about 90 °C) for a duration of 1 minute. The pre-foamed particles of polylactic acid have a density of approximately 60 g/l. Finally the pre-foamed particles of polylactic acid are coated in a fluidized bed reactor and after the coating of the pre-foamed polylactic acid particles the particles are once again impregnated with a blowing agent namely CO₂ by treatment in a pressure vessel at 20 bar for a duration of 20 minutes. The once again impregnated particles of polylactic acid contain approximately 7% by mass of CO₂. Subsequently the once again impregnated particles of polylactic acid are added to an industrial production unit for foamed moulded parts, wherein by application of steam further expansion and fusion from the pre-foamed particles of polylactic acid occurs to obtain a foamed moulded part, with a density of 60 g/l. According to the Dutch patent NL 1033719 it is also possible to place particles of polylactic acid after extrusion in a fluidized bed reactor to provide a coating, namely by application of a solution of 50% weight by mass of polyvinyl acetate. After coating the thus coated particles of polylactic acid are impregnated with a blowing agent, namely CO₂, by treatment in a pressure vessel at a pressure of 20 bar for a duration of 20 minutes. The impregnated particles of polylactic acid contain approximately 7% weight by mass of CO₂ and a subsequently added to an industrial production unit for foamed moulded parts, wherein by application of steam expansion and fusion of the particles of polylactic acid takes place to obtain a foamed moulded part, with a density of 60 g/l. In both methods the impregnation of the blowing agent is an essential step.

Particle based expandable polystyrene (EPS) is not only used as a packaging material but also in construction elements, for example as panels in the housing industries. Specific properties are required for such panels with regard to amongst others heat insulation, sound insulation and fire resistance (fire retardance). The present invention is focussed above all on the development of a particle based, expandable polystyrene (EPS) wherein the fire retardance of the materials, wherein EPS is present, is optimalized, wherein it is meant that such applications must meet the strict fire retardants requirements, in particular the DIN 4101-B2 test.

In the aboriculture and in the greenhouse cultivation industry is lots of substrate (for example soil) used as a medium for the growth of plants. This above all means the growing of plants under glass and the growing of nursery-trees in containers. The used substrates consist mostly of rough particles of pulverized peat, that is used in order to make the earth airy. Another growth substrate that is used in the cultivation sector is stone wool. Actually this is a very costly growth substrate. A disadvantage is above all that this material is difficult to break down. Important characteristics for growth substrates are, above all, the biodegradation, mechanical strength and porosity (for the conductance of water and air).

Further insulation panels that are made from foam are used as covers for interior divisions or walls. In such a situation when insulation panels are for example attached to an interior division, damp or moisture can build up between the panel and the wall. In order to prevent undesired development of damp the insulation panels are often provided with channels in order to facilitate the transport of the damp.

The production of foam moulded parts can according to international patent application WO2011133035 in the name of the present applicant occur according to a method whereby the starting materials, which can possibly be pre-expanded in so called steam chambers, whereby a further expansion of the polystyrene particles occurs. During this possible pre-foaming virgin EPS is for example treated under influence of steam, whereby the granules of expanded polystyrene are expanded. After such treatment the thus pre-foamed EPS can be further developed in a subsequent treatment, that is maturing, in particular storing the thus treated granules for a period of 4 to 48 hours. The final form occurs by treating the different starting materials in a steam mould or a steam treated mould. During the said process the particles will adhere to each other and a compact structure is formed. Before the said steam chambers or moulds are filled with a combination of starting materials, firstly a mixture of the desired EPS material is produced, whereby the desired composition is summarized in the dependent claims. After putting together the desired mixture, whereby the starting materials in particular are taken from silo's. The containers in the form are filled and thereafter steam is bubbled through. Due to the high temperature of the steam the present blowing agent will attempt to expand, and the EPS particles will fuse together due to the steam heating them to above the glass transition temperature en also due to the limited room in the form. The mould used here fore is provided with small openings through which the blowing agent and steam can pass.

The production of foam moulded parts can according to US 2010/0301509 A1 also occur in a continuous manner, utilizing a double conveyor belt.

The object of the present invention is to provide a method for the production of foam moulded parts, which foam moulded parts have a high temperature resistance.

Another object of the present invention is the production of a foam moulded part that is suitable for use as a growth substrate in the agricultural and horticulture industries, in particular in the greenhouse industry.

A further object is the provision of a method to manufacture a foamed moulded part, in which the porosity of the foamed moulded part is tuneable.

A further object of the present invention is the provision of a foam moulded part which is suitable for use in insulation applications, in particular as an insulation panel for interior wall insulation applications.

The present invention as herein described in the introduction is defined by the method of claim 1, the growth substrate of claim 10 and the insulation panel of claim 11. The method includes the following steps:
i) the provision of polymer foam granules
ii) the mixing of polymer foam granules with a glue composition,
iii) flowing a heat transporting medium through the mixture obtained in step ii) to obtain a foam moulded part.

By applying such a method one or more of the aims of the present invention are met. In the previously stated steps of the present method it is obvious that there is no impregnation with a blowing agent, in contrast to the methods disclosed in the herein previously discussed Dutch patent NL 1033719, wherein it is stated that after a step of coating an impregnation is necessary with a blowing agent, in particular CO₂.

The present method shows that between carrying out steps i) and ii), or between step ii) and iii), further more during step ii) and/or iii) there is no impregnation of a blowing agent. Above all it must be stated that in step i) a polymer foam granule is used as a starting material wherein no blowing agent is present, that is the percentage of blowing agent is lower than 0,1 weight%, in particular lower than 0,01 weight%, especially lower than 0,001 weight% relative to the mass of the polymer foam granule. The starting material used in step i) is in particular a already foamed polymer granule, and there is in the present invention no impregnation step using a single blowing agent. In a particular embodiment of the present invention it is possible to use a combination of foamed polymer granules, whereby recycled materials may also be used. The treatment conducted in step iii) involves therefore the compression or pressing together the mixture of polymer foam granules and glue composition in order to produce adhesion between the components. There is thus no mention of an expansion step, as is described in the prior art.

By applying the said method it is therefore apparent that a foam moulded part can be made which has an open structure, whereby the open structure should be seen as "spaces" between polymer granules adhering to each other. Such an open structure makes the foam moulded parts particularly suitable as a growth substrate for the growing of for example plants and vegetables whereby the roots thereof can adhere to the substrate. Such an open structure is also desirable in applications such as insulation panels for interior wall insulation whereby the naturally present channels between the polymer granules adhered to one another provide a means of transporting the damp through the panel, as well as providing the intended heat insulation characteristics. Furthermore the substrate made using the present method is also suitable to be used in drainage applications in particular due to the open structure.

In preferred embodiment is it above all desirable that in step iii) hot air is used as the heat transfer medium. Application of hot air ensures that the polymer granules and the glue composition develop a good adhesion, via which a compact moulded part is made. Above all the hot air ensures removal of the solvent used in the glue composition used in step ii).

The polymer foam granules are chosen from the group consisting of E-PLA, PLA-starch mix, PLA-PBAT mix, PLA with PHA, EPS, EPS/PPO, EPP, EPE, E-PET and starch foam, or combinations thereof. Particular examples include E-PLA foam with a high degree of crystallization or amorphous, preferably between 10 and 50% as measured by DSC, E-PLA foam amorphous, with a degree of crystallization of approximately 0%, as measured by DSC, E-PLA mixture comprising 40% P-DLA and 60% PLLA, PLA-starch mix (Thermoplastoic Starch), with an amount of PLA in the region of 10-50%, PLA-PBAT (ecoflex) mix, PLA with PHA. The abbreviation PLA stands for polylactic acid, PHA for polyhydroxyalkanoate compounds, EPS for expanded polystyrene, PPO for poly(p-phenyleneoxide), EPP for expanded polypropylene, EPE for expanded polyethene, PET for polyethylene terephthalate.

In an embodiment of the present invention the glue composition is based on one or more components chosen from the group of polyvinyl alcohol, polyvinyl acetate and styrene. Also belonging to glue compositions are latex. Another glue composition that can be named is PU and PA latexes. The amount of glue composition in the mixture of glue composition and polymer granules is in the range of about 5-50% by weight, preferably 10-40% by weight, more preferably about 10-30% by weight, calculated on basis of the amount of glue, as solids, on the amount of polymer granules. For example if one starts with 12 liter polymer granules of the BioFoam type, the weight thereof is about 200 g (density 17 g/l). The glue composition to be added is 7,5 g/l glue having a solids content of about 45%, resulting in about 36 g glue. The weight percentage glue is 18 % of 200 g polymer granules, consequently.

In the present method step ii) further comprises after mixing the obtained mixture of glue composition and polymer foam granules placing the mixture between two pressure bodies and subsequently providing pressure or compression created by the two pressure bodies wherein there is no expansion.

Carrying out an additional pressure step ensures a good mutual adhesion between the with glue composition wetted polymer foam granules. Mixing of the glue composition and the polymer foam granules can for example occur in a mixer where the polymer foam granules thus coated with a glue composition can be placed in for example a mould, which mould is provided with a number of openings in order to make the passage of a heat transfer medium possible. Such a method is can also be seen as a batch process.

According to the invention, the two pressure bodies comprise two parallel oriented transport or conveyor belts in between which the mixture of glue composition and polymer foam granules is located. These belts are located one above the other so that the mixture of glue composition and polymer foam granules is poured on the lower band and compression is exerted by the position of the two transport belts. Thus it is possible to carry out the present invention in a continuous process. In an embodiment of the present invention an amount of a glue composition is mixed in a mixing apparatus with the polymer foam granules, whereby the thus obtained mixture is added to the transport belt. By using a spacer it is possible to alter the height between the two transport bands whereby in fact a defined compression can be provided to the mixture. It is thus possible to obtain a moulded part that has for example a density of 30 kg per cubic meter, starting from a polymer granule with a density of for example 20 kg per cubic meter. The compression is in the range of 10-50%, preferably in the range of 15-40%, more preferably 20-30%. By choosing the glue composition it is possible to provide the final moulded parts with specific properties, for example to increase the density, the flame retardance, the increase in damp transport properties, antibacterial, antistatic, colour and smell. It is also possible to manufacture foam moulded parts with any desired length. The transport belts are carried out in such a way that for example perforations can be present, that enable the addition of a heat transfer medium to the mixture of glue composition and polymer foam granules. It is also possible to contact the thus treated polymer foam granules with a further treatment with steam.

The present glue composition can further comprise additives chosen from the group consisting of perfume agents, colouring agents, damp transport influencing agents, materials to increase the heat insulation value and flame retardance, antistatic agents. Examples of these are for example expandable graphite, phosphates, phosphate esters, aluminium hydroxide, magnesium hydroxide, sodium metasilicate (water glass), potassium metasilicate, metal hydroxides or metal oxides, metal pigments, silicates and glass fibres. A suitable binding or adhesive agent can be, for example Vinnapas 733HD, Cordifix SP 1003 and Vinnex 2510.

As suitable additives the following can be named: expandable graphite, trass, Ettringite, namely calcum aluminium sulphate mineral Ca₆Al₂O₃(SO₄)₃(OH)₁₂˙26H₂O, (CaO)₆(Al₂O₃)(SO₃)₃˙32H₂O, (CaO)₃(Al₂O₃)(CaSO₄)₃˙32H₂O, hexacalciumaluminatrisulphatehydrate, calcium silicate (Ca₂SiO₄), polyvinylpyrrollidone (PVP), expandable perlite, wollastonite (CaCO₃) and other clays.

The method shall be further explained by the following non limiting examples.

### Example 1

An amount of foam based on EPS (Biofoam, manufactured by Synbra, Etten Leur, NL), was mixed with a glue composition based on polyvinyl alcohol (Cordifix SP 1003, manufactured by Cordial, Groningen, NL). After mixing these said polymer foam granules with the glue the mixture was added to a static mould and treated with hot air. The obtained moulded part met the requirements for the Euroclass E fire test.

### Example 2

Example 1 was repeated but the glue composition used was polyvinyl acetate Vinnex 2510 (manufactured by Wacker, Burghausen, DE).

### Example 3

Example 2 was repeated but the glue composition used was Vinnex 2510 (manufactured by Wacker, Burghausen, DE), wherein expandable graphite was added.

### Example 4

Example 1 was repeated but instead of a static mould a movable mould was used, in particular a construction comprising two parallel oriented transport belts in between which the mixture of glue composition and foam granule was added and air was also added.

The results from the said examples are found in Table 1. All thus obtained moulded parts met the requirements of Euroclass E fire test.

Additional experiments on basis of the continuous process as disclosed in Example 4 were conducted and the results are shown in Table II. The term "DS" means compressive strength (EN 826). The term "TS" means tensile strength (EN 1607). The term "BS" means strength at break (EN 12089).

The invention must be seen as a method for the manufacture of a foam moulded part with an open structure, according to claim 1. The open structure is obtained by adhesion of already foamed polymer granules to each other by application of a adhesion agent and treating the thus adhered polymer granules with a heat transfer medium. The said open structure makes it possible to use the foam moulded part as a growth substrate for vegetables and plants but also as an insulation panel in interior wall insulation applications.

**Table I**

| **Measurements large mold** | | | | | | | | | | | | | |
|---|---|---|---|---|---|---|---|---|---|---|---|---|---|
| | Length | Breadth | Thickness | | Compression Mm | Final thickness | | | | | | | |
| Static mould | 1055 | 625 | 110 | | 20 | 87 | | | | | | | |
| Movable mould | | 1200 | 100 | | 30 | 77 | | | | | | | |

| **Static mould** | | | | | | | | | | | | | |
|---|---|---|---|---|---|---|---|---|---|---|---|---|---|
| Material | | Glue | Type | Addition | Mixture | | Drying time | Drying temperature | Final density | Compression strength | lambda value | Fire test | |
| | kg/m³ | Supplier | | Glue kg/m3 | | kg/m3 | minutes | °C | kg/m³ | kPa | mW/Mk | method | result |
| BioFoam | 16.5 | Cordial, Groningen | Cordifix SP 1003 | 5 | | | 15 | 36 | 20.8 | 47.2 | 38 | Euroclass E | pass |
| BioFoam | 17 | Wacker, Burghausen | Vinnex 2510 | 5 | | | 15 | 36 | 22 | 55 | 38 | Euroclass E | pass |
| EPS 710F | 17 | Wacker, Burghausen | | 2 | expandable graphite | 5 | 25 | 36 | 22 | 55 | 38 | Euroclass E | pass |

| **Movable mould** | | | | | | | | | | | | | |
|---|---|---|---|---|---|---|---|---|---|---|---|---|---|
| Material | | Glue | Type | Addition | | | Drying time | Drying temperature | Final density | Compression strength | lambda value | Fire test | |
| | kg/m³ | Supplier | | | | | minutes | °C | kg/m³ | kPa | mW/Mk | method | result |
| BioFoam | 16.5 | Cordial, Groningen | Cordifix SP 1003 | 5 | | | 4 | 45 | 29 | 55 | 39 | Euroclass E | pass |

**Table II**

| Starting material | Glue | Amount glue (g/L nat) | Compression (%) | Drying temperature (°C) | Density (kg/m³) | λ (W/mK) | DS (kPa) | TS (kPa) | BS initial (kPa) | BS after compression nat (kPa) | BS after compression dried at 40 °C (kPa) | B2 results |
|---|---|---|---|---|---|---|---|---|---|---|---|---|
| BioFoam | Cordial with graphite | 20 | 15 | 65 | 29.64 | 0.03942 | 60.8 | 85.4 | 88.6 | 18.45 | 93.35 | |
| BioFoam | Cordial with graphite | 20 | 20/25 | 65 | 30.08 | 0.03908 | 66.5 | 110.0 | 102.6 | 22.8 | 102.55 | |
| BioFoam | Coridal with graphite | 20 | 20/30 | 65 | 34.98 | 0.03864 | 86.6 | 149.6 | 147.3 | 35.3 | 138.85 | |
| BioFoam | Cordial with graphite | 30 | 30 | 65 | 35.77 | 0.03885 | 86.3 | 164.0 | 147.8 | 37.1 | 138 | |
| BioFoam | Blue (drainage plate) | 35 | 30 | 65 | 31.76 | 0.03761 | 88.5 | 136.6 | 139.8 | 19.7 | | |
| BioFoam | Blue (drainage plate) | 35 | 30 | 50 | 31.55 | 0.03778 | 84.1 | 138.6 | 139.4 | 17.05 | 132.4 | |
| BioFoam | Blue (drainage plate) | 12 | 30 | 50 | 27.38 | 0.03733 | 74.4 | 70.6 | 97.9 | 0 | | pass |
| BioFoam | Vinnex | 12 | 30 | 50 | 33.77 | 0.03789 | 73.4 | 100.4 | 168.4 | 37.9 | 161.05 | pass |
| BioFoam | Vinnex | 12 | 30 | 50 | 34.95 | 0.03782 | 78.4 | 161.1 | 172.3 | 40.3 | 161.3 | pass |
| BioFoam | Vinnex | 20-8 | 30 | 50 | 40.27 | 0.03805 | 77.3 | 159.2 | 184.5 | 37.9 | 173.35 | pass |
| BioFoam | Vinnex | 20-8 | 30 | 50 | 39.12 | 0.03803 | 75.2 | 147.5 | 163.4 | 38.8 | 137.05 | pass |
| EPS white | Cordial with graphite | nd | nd | nd | 31.23 | 0.03727 | 67.4 | 96.1 | 108.1 | 0 | 83.6 | pass |
| Neopor 5200R | Cordial with graphite | nd | nd | nd | 33.57 | 0.03345 | 70.0 | 83.6 | 89.9 | 0 | 99.1 | |
| BioFoam | Cordial | 5 | 20 mm | 33-36 (15 min) | 28.75 | 0.03721 | 66.1 | nd | 51.2 | 0 | nd | |
| BioFoam | Vinex | 5 | 20 mm | 33-36 (15 min) | 27.55 | 0.03706 | 59.4 | nd | 58.3 | 0 | nd | |
| BioFoam | Vinex | 10 | 30 mm | 50 (15 min) | 36.14 | 0.03595 | 103.2 | nd | 167.1 | 51.4 | nd | |
| BioFoam | Vinex | 10 | 30 mm | 50 (15 min) + 80 (30 min) | 37.67 | nd | nd | nd | 185 | 81.3 | nd | |

| | | | | | | | | | | | | |
|---|---|---|---|---|---|---|---|---|---|---|---|---|
| nd = not done | | | | | | | | | | | | |

## Claims

1. A method for the production of open structure foam moulded parts based on polymer foam granules, wherein the method comprises the following steps:
i) the provision of polymer foam granules chosen from the group consisting of E-PLA, PLA-starch mixture, PLA-PBAT mixture, PLA with PHA, EPS, EPS/PPO, EPP, EPE, E-PET and starch foam, or one or more combinations thereof,
ii) mixing the polymer foam granules with a glue composition,
iii) flowing a heat transfer medium through the mixture obtained in step ii) to obtain said open structure foamed moulded parts, wherein in said open structure foamed moulded parts said polymer foam granules are adhered to each other via said glue composition, wherein step ii) further comprises adding the mixture of glue composition and polymer foam granules to two pressure bodies and subsequently exerting pressure via the said pressure bodies, wherein said pressure bodies comprise two parallel arranged transport bands between which the mixture of glue composition and polymer foam granules is located, wherein said transport bands are located one above the other so that said mixture of glue composition and polymer foam granules is poured on the lower band and compression is exerted by the position of said transport bands, wherein said compression is in the range of 10 - 50%.

2. A method according to claim 1, wherein hot air is used as said heat transfer medium.

3. A method according to one or more of the aforementioned claims, wherein said polymer foam granules are E-PLA polymer foam granules.

4. A method according to one or more of the aforementioned claims, wherein the glue composition comprises one or more of the components based on polyvinyl alcohol, polyvinyl acetate and styrene.

5. A method according to one or more of the aforementioned claims, wherein the glue composition further comprises one or more additives, chosen from the group consisting of colouring agents, materials to increase the heat insulation value and flame retarding agents, and antistatic agents.

6. A method according to one or more of the aforementioned claims, wherein already pre-foamed polymer granules are used in step i).

7. A method according to one or more of the afore mentioned claims, wherein the amount of blowing agent present in the in step i) used polymer granules is lower than 0,1 weight% by mass, in particular lower than 0,01 weight% by mass, in particular lower than 0,001 weight% by mass, based on the weight of the polymer foam granules.

8. A method according to one or more of the aforementioned claims, wherein no impregnation with a blowing agent is conducted during or between one or more of steps i), ii) and iii).

9. A method according to one or more of the aforementioned claims, wherein said compression is in the range of 15 - 40%, preferably in the range of 20 - 30%.

10. A growth substrate for plants and vegetables made of an open structure moulded part obtained according to a method according to one or more of claims 1-9.

11. An insulation panel for interior wall insulation made of an open structure moulded part obtained according to a method according to one or more of claims 1-9.

## Patentansprüche

1. Verfahren zur Herstellung von Schaumstoffformteilen mit offener Struktur auf der Basis von Polymerschaumgranulaten, wobei das Verfahren folgende Schritte umfasst:
i) Bereitstellung von Polymerschaumgranulaten, ausgewählt aus der Gruppe bestehend aus E-PLA, PLA-Stärkemischung, PLA-PBAT-Mischung, PLA mit PHA, EPS, EPS/PPO, EPP, EPE, E-PET und Stärkeschaum oder eine oder mehrere Kombinationen davon,
ii) Mischen der Polymerschaumgranulate mit einer Klebstoffzusammensetzung,
iii) Fließen eines Wärmeübertragungsmediums durch die in Schritt ii) erhaltene Mischung, um die Schaumstoffformteile mit offener Struktur zu erhalten, wobei in den Schaumstoffformteilen mit offener Struktur die Polymerschaumgranulate über die Klebstoffzusammensetzung aneinander haften, wobei Schritt ii) weiter das Hinzufügen der Mischung aus Klebstoffzusammensetzung und Polymerschaumgranulat zu zwei Druckkörpern und das anschließende Ausüben von Druck über die Druckkörper umfasst, wobei die Druckkörper zwei parallel angeordnete Transportbänder aufweisen, zwischen denen sich die Mischung aus Klebstoffzusammensetzung und Polymerschaumgranulat befindet, wobei die Transportbänder so übereinander angeordnet sind, dass die Mischung aus Klebstoffzusammensetzung und Polymerschaumgranulat auf das untere Band gegossen wird und durch die Position der Transportbänder eine Kompression ausgeübt wird, wobei die Kompression im Bereich von 10 bis 50 % liegt.

2. Verfahren nach Anspruch 1, wobei Warmluft als Wärmeübertragungsmedium verwendet wird.

3. Verfahren nach einem oder mehreren der vorhergehenden Ansprüche, wobei die Polymerschaumgranulate E-PLA-Polymerschaumgranulate sind.

4. Verfahren nach einem oder mehreren der vorhergehenden Ansprüche, wobei die Klebstoffzusammensetzung eine oder mehrere der Komponenten auf Basis von Polyvinylalkohol, Polyvinylacetat und Styrol umfasst.

5. Verfahren nach einem oder mehreren der vorhergehenden Ansprüche, wobei die Klebstoffzusammensetzung weiter ein oder mehr Additive umfasst, ausgewählt aus der Gruppe, bestehend aus Färbemitteln, Materialien zur Erhöhung des Wärmeisolationswerts und Flammschutzmitteln und Antistatika.

6. Verfahren nach einem oder mehreren der vorhergehenden Ansprüche, wobei bereits vorgeschäumte Polymergranulate in Schritt i) verwendet werden.

7. Verfahren nach einem oder mehreren der vorhergehenden Ansprüche, wobei die Menge des Treibmittels des in Schritt i) verwendeten Polymergranulats weniger als 0,1 Gew.-%, insbesondere weniger als 0,01 Gew.-%, insbesondere weniger als 0,001 Gew.-% beträgt, auf der Basis des Gewichts der Polymerschaumgranulate.

8. Verfahren nach einem oder mehreren der vorhergehenden Ansprüche, wobei während oder zwischen einem oder mehreren der Schritte i), ii) und iii) keine Imprägnierung mit einem Treibmittel durchgeführt wird.

9. Verfahren nach einem oder mehreren der vorhergehenden Ansprüche, wobei die Kompression im Bereich von 15 bis 40 % liegt, vorzugsweise im Bereich von 20 bis 30 %.

10. Wachstumssubstrat für Pflanzen und Gemüse, hergestellt aus einem Formteil mit offener Struktur, erhalten nach einem Verfahren nach einem oder mehreren der Ansprüche 1 - 9.

11. Isolationsplatte für eine Innenwandisolierung, hergestellt aus einem Formteil mit offener Struktur, erhalten nach einem Verfahren nach einem oder mehreren der Ansprüche 1 - 9.

## Revendications

1. Procédé de production de pièces moulées en mousse à structure ouverte à base de granules de mousse polymères, dans lequel le procédé comprend les étapes suivantes consistant :
i) à fournir des granules de mousse polymères choisis dans le groupe constitué par E-PLA, un mélange PLA-amidon, un mélange PLA-PBAT, PLA avec PHA, EPS, EPS/PPO, EPP, EPE, E-PET et une mousse d'amidon, ou une ou plusieurs combinaison(s) de ceux-ci,
ii) à mélanger les granules de mousse polymères avec une composition de colle,
iii) à faire circuler un agent de transfert de chaleur à travers le mélange obtenu dans l'étape ii) pour obtenir lesdites pièces moulées en mousse à structure ouverte, où, dans lesdites pièces moulées en mousse à structure ouverte, lesdits granules de mousse polymères sont collés les uns aux autres par ladite composition de colle,
dans lequel l'étape ii) comprend en outre le fait d'ajouter le mélange de composition de colle et de granules de mousse polymères à deux corps de pression et d'exercer par la suite une pression par lesdits corps de pression, où lesdits corps de pression comprennent deux bandes de transport agencées parallèlement entre lesquelles est situé le mélange de composition de colle et de granules de mousse polymères, où lesdites bandes de transport sont situées l'une au-dessus de l'autre de sorte que ledit mélange de composition de colle et de granules de mousse polymères soit versé sur la bande inférieure et la compression est exercée par la position desdites bandes de transport, où ladite compression se trouve dans la plage allant de 10 à 50%.

2. Procédé selon la revendication 1, dans lequel de l'air chaud est utilisé comme étant ledit agent de transfert de chaleur.

3. Procédé selon une ou plusieurs des revendications susmentionnées, dans lequel lesdits granules de mousse polymères sont des granules de mousse polymères E-PLA.

4. Procédé selon une ou plusieurs des revendications susmentionnées, dans lequel la composition de colle comprend un ou plusieurs des composants à base d'alcool polyvinylique, d'acétate de polyvinyle et de styrène.

5. Procédé selon une ou plusieurs des revendications susmentionnées, dans lequel la composition de colle comprend en outre un ou plusieurs additif(s), choisi(s) dans le groupe constitué par des colorants, des matériaux permettant d'augmenter la valeur d'isolation thermique et des agents ignifuges, et des agents antistatiques.

6. Procédé selon une ou plusieurs des revendications susmentionnées, dans lequel des granules polymères déjà pré-expansés sont utilisés à l'étape i).

7. Procédé selon une ou plusieurs des revendications susmentionnées, dans lequel la quantité d'agent gonflant présent dans les granules polymères utilisés à l'étape i) est inférieure à 0,1% en poids par masse, en particulier inférieure à 0,01% en poids par masse, en particulier inférieure à 0,001% en poids par masse, par rapport au poids des granules de mousse polymères.

8. Procédé selon une ou plusieurs des revendications susmentionnées, dans lequel aucune imprégnation avec un agent gonflant n'est effectuée pendant ou entre une ou plusieurs des étapes i), ii) et iii).

9. Procédé selon une ou plusieurs des revendications susmentionnées, dans lequel ladite compression se trouve dans la plage allant de 15 à 40%, de préférence dans la plage allant de 20 à 30%.

10. Substrat de croissance pour plantes et légumes réalisé en une pièce moulée à structure ouverte obtenue selon un procédé selon une ou plusieurs des revendications 1 à 9.

11. Panneau isolant pour isolation de parois intérieures réalisé en une pièce moulée à structure ouverte obtenue selon un procédé selon une ou plusieurs des revendications 1 à 9.
